## Europäisches Patentamt

## European Patent Office

## Office européen des brevets

(11) Veröffentlichungsnummer: **0 257 431**
**B1**

# EUROPÄISCHE PATENTSCHRIFT

(45) Veröffentlichungstag der Patentschrift:
25.04.90

(51) Int. Cl.⁴: **B60R 11/02**, H05K 11/02

(21) Anmeldenummer: 87111578.8

(22) Anmeldetag: 10.08.87

(54) Halterung und Gehäuse für einen Funksendeempfänger der elektrischen Nachrichtentechnik.

(30) Priorität: 13.08.86 DE 3627503

(43) Veröffentlichungstag der Anmeldung:
02.03.88 Patentblatt 88/9

(45) Bekanntmachung des Hinweises auf die Patenterteilung:
25.04.90 Patentblatt 90/17

(84) Benannte Vertragsstaaten:
AT BE CH DE FR GB IT LI LU NL SE

(56) Entgegenhaltungen:
EP-A- 0 138 022
WO-A-86/02891
DE-C- 687 866
FR-A- 2 109 686

(73) Patentinhaber: Siemens Aktiengesellschaft,
Wittelsbacherplatz 2, D-8000 München 2(DE)

(72) Erfinder: Nothnagel, Gerd, Ing.(grad.), Geroltstrasse 36,
D-8000 München 2(DE)
Erfinder: Grassl, Erwin, Drygalsky-Allee 111,
D-8000 München 71(DE)
Erfinder: Thomfohrde, Heiner, Ing.(grad.), Flurstrasse 9,
D-8021 Hohenschäftlarn(DE)

**Beschreibung**

Die Erfindung bezieht sich auf ein Gehäuse mit Halterung für einen Funksendeempfänger der elektrischen Nachrichtentechnik, die ineinander steckbar sind und dabei automatisch die gegenseitigen elektrischen Verbindungen untereinander herstellen.

Derartige Funksendeempfänger werden im Mobilfunk benutzt, um das Telefonieren von einem Fahrzeug aus zu einer Feststation zu ermöglichen. Bei solchen Geräten wird gefordert, daß der Zugriff zu den elektrischen Teilen, insbesondere zum Funkgerät selbst zumindest ohne Zerstörung wichtiger Teile unmöglich wird.

Der Erfindung liegt die Aufgabe zugrunde, eine Anordnung anzugeben, die das Problem auf einfache Weise löst.

Bei einer Anordnung der eingangs genannten Art wird diese Aufgabe erfindungsgemäß dadurch gelöst, daß beidseits der Breitseiten des Gehäuses in der Halterung Hebel vorgesehen sind, die im eingesteckten Zustand das Gehäuse und die Halterung gegenseitig mittels Sperrhaken oben und Rasthaken unten verrasten und zumindest an einem dieser von außen und oben greifbaren Hebel ein Schloß angeordnet ist, das im versperrten Zustand das Ausklinken des Hebels verhindert.

Weitere vorteilhafte Ausgestaltungen des Erfindungsgegenstandes sind in den Unteransprüchen enthalten.

Nachstehend wird die Erfindung anhand von Figuren näher erläutert.

Dabei zeigt die

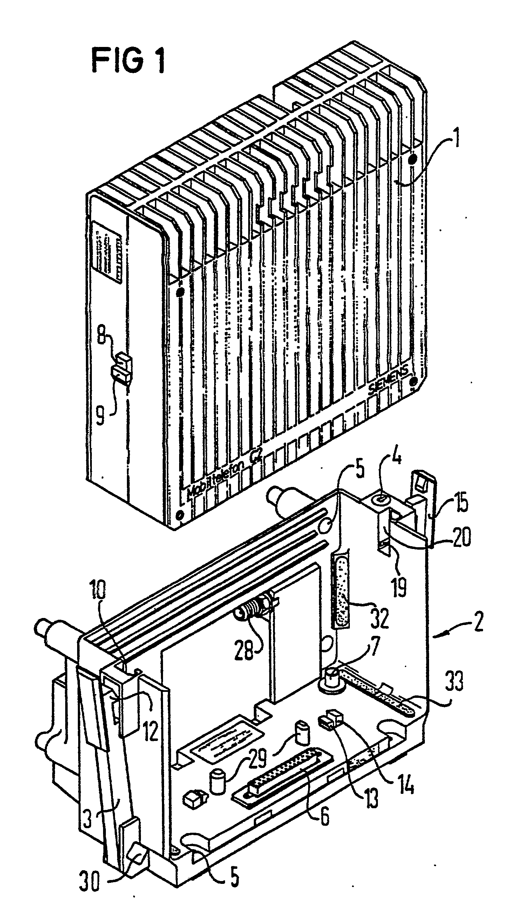

Figur 1 in einer Explosionsdarstellung das Funkgerät und darunter liegend die Halterung.

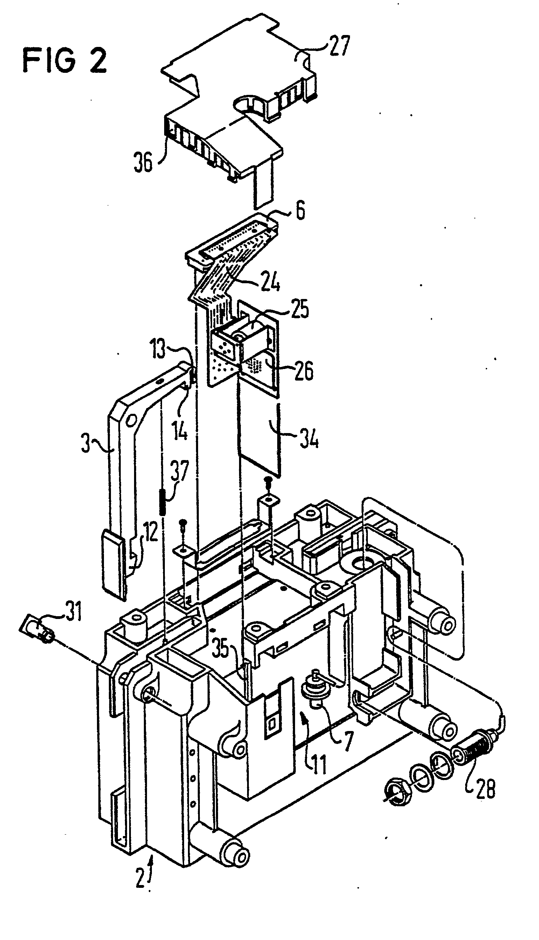

Figur 2 zeigt in einer teilweisen Explosionsdarstellung die wichtigsten Teile der Halterung von unten her gesehen.

Figur 3 zeigt schließlich einen Ausschnitt der Halterung mit der Sperreinrichtung.

Das Autofunkgerät 1 befindet sich in einem allseits geschlossenen geschirmten und mit Kühlrippen versehenen Gehäuse. Dieses Gehäuse ist in eine nach vorne offene Halterung 2 einsteckbar, wobei seitlich am Gehäuse Rastnasen 8 vorgesehen sind, die in entsprechende Zentrierschächte 20 in den Seitenwänden der Halterung einsteckbar sind. Dabei hat zur Sicherung gegen verdrehtes Einschieben eine der Rastnasen eine Verbreiterung 9, die nur in der richtigen Lage in eine entsprechend gestaltete Nut 10 des entsprechenden Zentrierschachtes eingreifen kann. Am Boden der Halterung sind zusätzliche Zentrierstifte 29 vorgesehen, die mittels kegeliger Anlaufflächen dafür sorgen, daß letztendlich der Unterteil des Gehäuses automatisch auf die elektrischen Anschlußelemente wie ein Antennenstecker 7 und einen mehrpoligen Anschlußstecker 6 zentriert wird.

Zur Sicherung des Funkgerätes in dieser Lage sind seitwärts an der Halterung L-förmig gestaltete Hebel 3 vorgesehen, die im Verbindungsbereich der beiden Hebelschenkel in einer Hebellagerbuchse 30 mittels eines Zapfens 31 gehalten sind. Dieser Hebellagerzapfen 30 hat rückseitig Rasthaken und ist dadurch im eingebauten Zustand der Halterung kaum entfernbar. Der Hebel 3 ist durch eine Feder 37 gegen den Boden der Halterung verspannt, so daß beim Einschieben des Gehäuses automatisch eine Verrastung erfolgt.

Gegen die Oberseite (Einschubseite) hat der Hebel 3 Niederhaltehaken 12, die im eingeschobenen Zustand des Gehäuses hinter die erwähnten Rastnasen 8 greifen und das Funkgerät festhalten. Hierzu ist der andere unten liegende Schenkel des Hebels 3 an seinem Ende mit Rasthaken 13 versehen, die in eine entsprechende Ausnehmung am Boden der Halterung eingreifen und im eingeschobenen Zustand des Gehäuses einschnappen. Soll das Gehäuse wieder entnommen werden, so lassen sich mittels verbreiteter Handgriffe 15 an den oberen Enden der Hebel 3 die Niederhaltehaken 12 entsperren. Zusätzlich sind im Bodenbereich der Halterung am anderen Schenkel der Hebel 3 neben dem Parkstellungsrasthaken 13 Nasen 14 vorgesehen, die das Gehäuse beim Auseinanderspreizen der Hebegriffe 15 nach oben anheben, um das Lösen der Mehrfachsteckverbindungen gegen deren Haltekräfte zu erleichtern. Ferner sind zur Lagesicherung und Abstützung sowie Dämpfung gegen Vibration in den Innenkanten der Halterung Dämpfungsmaterialien angebracht.

Die elektrischen Verbindungen zwischen dem Funkgerät 1 und der Halterung werden durch einen im Boden befindlichen Mehrfachsteckverbinder 6 und einen Antennenstecker 7 hergestellt. Beide Elemente sind vorzugsweise schwimmend am Boden in der Halterung befestigt. Zur elektrischen Verbindung nach außen ist die Mehrfachsteckverbindung 6 über eine bandförmige Innenverdrahtung 24 mit einem mehrpoligen Stecker 25 zur Stromversorgung und einem mehrpoligen Steckverbinder 26 für die übrigen Signal- und Versorgungsleitungen sowie den Anschlüssen zum Bediengerät verbunden. Diese Einheit ist derart gestaltet, daß sie mittels eines Massebleches 34 in eine Nut 35 am Boden der Halterung einsteckbar ist. Die entsprechende Öffnung im Boden der Halterung ist schließlich durch eine metallisierte Bodenwanne 27 verschließbar, die hierzu Rasthaken 36 am Umfang hat, mittels derer sie mit dem Gehäuse elektrisch verbunden ist. Die Antennenleitung führt vom inneren Antennenstecker 7 für das Funkgerät über einen Kanal auf eine Antennenbuchse 28 für den Außenanschluß. Sämtliche elektrische Anschlußelemente liegen so geschützt und verdeckt in einem Raum 11 in der Rückwand der Halterung. Ebenfalls geschützt und verdeckt sind die Anschraubbohrungen 5 der Halterung, so daß im eingeschobenen Zustand des Gehäuses der Zugriff zu diesen Befestigungselementen verwehrt ist.

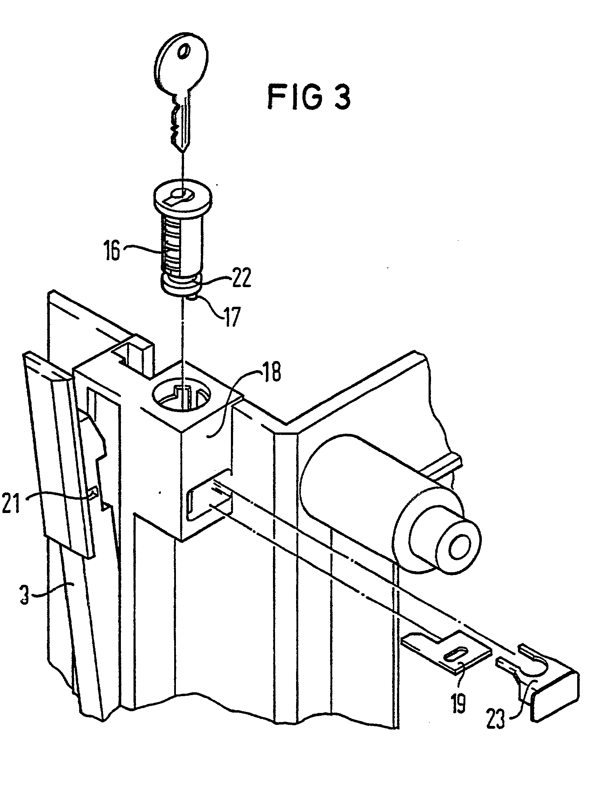

Zur eigentlichen Sicherung des Gerätes gegen Entnahme aus der Halterung ist schließlich bei mindestens einem der Hebel 3 im Bereich des Hebelgriffs 15 ein Sperrschloß 4 vorgesehen. Diese in Figur 3 näher dargestellte Sperreinrichtung besteht aus einem Zylindersperrschloß 16, das in einem Anguß des Zentrierschachtes 20 für die Führung des Funkgerätes untergebracht ist. Der Zylinder des Sperrschlosses hat hierfür am unteren Ende einen Zapfen 17, der in das Langloch eines Sperrschiebers 19 eingreift und bei Drehung des Zylinders kann dieser Sperrschieber 19 mittels einer entsprechenden Nase in eine Ausnehmung 21 des Hebels 3 eingreifen. Der Hebel 3 ist dadurch gegen Auseinanderspreizen gesichert. Zur Lagesicherung des Zylinders hat dieser im unteren Bereich eine Ringnut 22, in die nach dem Einbringen der gesamten Sperreinheit eine Federpratze 23 eingreift. Die Federpratze 23 ist so gestaltet, daß sie ohne Zerstörung nicht entnommen werden kann.

Es ist auf diese Weise möglich, mit relativ einfachen Mitteln eine Halterung für ein Mobilfunkgerät so zu gestalten, daß ohne Zerstörung von wichtigen Teilen ein unbefugter Zugriff verwehrt wird.

**Patentansprüche**

1. Gehäuse (1) mit Halterung (2) für einen Funksendeempfänger der elektrischen Nachrichtentechnik, die ineinander steckbar sind und dabei automatisch die gegenseitigen elektrischen Verbindungen (6, 7) untereinander herstellen, **dadurch gekennzeichnet,** daß beidseits der Breitseiten des Gehäuses (1) in der Halterung (2) Hebel (3) vorgesehen sind, die im eingesteckten Zustand das Gehäuse (1) und die Halterung (2) gegenseitig mittels Sperrhaken (12) oben und Rasthaken (13) unten verrasten und zumindest an einem dieser von außen und oben greifbaren Hebel (3) ein Schloß (4) angeordnet ist, das im versperrten Zustand das Ausklinken des Hebels (3) verhindert.

2. Anordnung nach Anspruch 1, **dadurch gekennzeichnet,** daß die Halterung (2) derart gestaltet ist, daß im verrasteten Zustand des Gehäuses (1) der Zugang zu den Befestigungselementen mit ihren Anschraubbohrungen (5) und den elektrischen Anschlüssen (6, 7) des Gerätes verhindert ist.

3. Anordnung nach Anspruch 1 oder 2, **dadurch gekennzeichnet,** daß am Gehäuse (1) seitlich wenigstens an einer der Rastnasen (8) für die Hebel eine Verbreiterung (9) vorgesehen ist, die im Zusammenwirken mit einer entsprechenden Nut (10) in der Halterung (2) ein Einstecken in falscher Lage verhindert.

4. Anordnung nach einem der vorhergehenden Ansprüche, **dadurch gekennzeichnet,** daß in der Rückseite der Halterung (2) ein Hohlraum (11) für Signal- und Stromversorgungssteckverbinder (25, 26, 28) nach außen vorgesehen ist, deren Anschlüsse am Boden der Halterung in entsprechenden Steckverbindern (6, 7) für die automatische Einschubkontaktierung enden.

5. Anordnung nach Anspruch 4, **dadurch gekennzeichnet,** daß der Hohlraum (11) bodenseitig durch eine einschnappbare metallisierte Bodenwanne (27) abgeschlossen und abgeschirmt ist.

6. Anordnung nach einem der vorhergehenden Ansprüche, **dadurch gekennzeichnet,** daß die seitlichen Hebel (3) neben den obenliegenden Sperrhaken (12) im Boden der Halterung zusätzlich zu federnden Rasthaken (13) Nasen (14) haben, die beim Auseinanderspreizen der Hebel mittels ihrer Griffe (15) im entsperrten Zustand von unten her auf das Gehäuse (1) drücken und simultan zur Entsperrung der Sperrhaken (12) die Verrastung der bodenseitigen Rasthaken (13) aufheben.

7. Anordnung nach einem der vorhergehenden Ansprüche, **dadurch gekennzeichnet,** daß der Zylinder (16) des Schlosses (4) in einem Anguß (18) des Schachtes (20) der obenseitigen Verriegelung angeordnet ist und mit einem Zapfen (17) in einem Sperrschieber (19) eingreift, der in eine seitliche Ausnehmung (21) im Hebel (3) eingreift und unten eine Ringnut (22) hat, in die eine von hinten einschnappbare Federpratze (23) eingreift.

**Revendications**

1. Boîtier (1) comportant un dispositif de fixation (2) pour un radio émetteur/récepteur de la technique électrique de transmission d'informations, ce boîtier et ce dispositif de fixation pouvant être enfichés l'un dans l'autre et établissant automatiquement entre eux les liaisons électriques réciproques (6, 7), caractérisé par le fait qu'il est prévu de part et d'autre des grands côtés du boîtier (1), dans le dispositif de fixation (2), des leviers (3), qui verrouillent entre eux le boîtier (1) et le dispositif de fixation (2) à l'état enfiché à l'aide de crochets de blocage (12) à leur partie supérieure et à l'aide de crochets d'encliquetage (13) à leur partie inférieure et qu'au moins sur l'un de ces leviers (3), qui peuvent être saisis extérieurement, à leur partie supérieure, est disposé une serrure (4), qui à l'état bloqué, empêche le désencliquetage du levier (3).

2. Dispositif suivant la revendication 1, caractérisé par le fait que le dispositif de fixation (2) est agencé de telle sorte que lorsque le boîtier (1) est à l'état verrouillé, l'accès aux éléments de fixation, au niveau de leurs perçages de fixation par vissage (5), et au bornes électriques (6, 7) de l'appareil est empêché.

3. Dispositif suivant la revendication 1 ou 2, caractérisé par le fait que sur le boîtier (1) il est prévu latéralement, au moins sur l'un des ergots d'encliquetage (8) pour les leviers, une partie élargie (9), qui, en coopérant avec une rainure correspondante (10) ménagée dans le dispositif de fixation (3), empêche un enfichage en position erronée.

4. Dispositif suivant l'une des revendications précédentes, caractérisé par le fait qu'il est prévu extérieurement, dans la face arrière du dispositif de fixation (2), une cavité (11) pour des connecteurs (25, 26, 28) de transmission de signaux et d'alimentation en courant, dont les bornes se terminent, dans la base du dispositif de fixation, dans des connecteurs correspondants (6, 7) pour l'établissement automatique du contact par enfichage.

5. Dispositif suivant la revendication 4, caractérisé par le fait que la cavité (11) est fermée et blindée, au niveau de sa base, par une coque de base en forme de cuvette métallisée (27) pouvant être fixée par encliquetage.

6. Dispositif suivant l'une des revendications précédentes, caractérisé par le fait qu'en plus des crochets de blocage (12) situés à leur partie supérieure, les leviers latéraux (3) possèdent dans la base du dispositif de fixation, outre des crochets élastiques d'encliquetage (13), des becs (14), qui, lors de l'écartement des leviers à l'aide de leurs poignées (15) les amenant dans l'état débloqué, exercent à partir du bas une pression sur le boîtier (1) et, tout en débloquant simultanément les crochets de blocage (12), suppriment le verrouillage des crochets d'encliquetage (13) situés au niveau de la base.

7. Dispositif suivant l'une des revendications précédentes, caractérisé par le fait qu'en le cylindre (16) de la serrure (4) est disposé dans un trou de coulée (18) du logement (20) du système de verrouillage situé à la partie supérieure et s'engage, par un téton (17), dans un poussoir de blocage (19), qui s'engage dans un évidement latéral (21) ménagé dans le levier (3) et possède, à sa partie inférieure, une rainure annulaire (22), dans laquelle s'engage une griffe élastique (23) pouvant être insérée par encliquetage à partir de l'arrière.

## Claims

1. Casing (1) with bracket (2) for a radio transceiver in electrical telecommunications technology, which can be plugged into one another and at the same time automatically produced mutual electrical connections (6, 7) between each other, characterized in that, on both sides of the broad sides of the casing (1) levers (3) are provided in the bracket (2), which levers in the plugged in state engage the casing (1) and the bracket (2) with each other by means of locking hooks (12) above and catches (13) below, and at least on one of these levers (3) which can be touched from the outside and from above, a lock (4) is arranged which prevents, in the locked state, the unlatching of the lever (3).

2. Arrangement according to Claim 1, characterized in that the bracket (2) is formed in such a way that, in the locked state of the casing (1), access to the securing elements with their screw holes (5) and to the electrical terminals (6, 7) of the equipment is prevented.

3. Arrangement according to Claim 1 or 2, characterized in that, laterally on the housing (1), a widening (9) is provided at least on one of the engaging lugs (8) for the levers, which widening, in conjunction with a corresponding groove (10) prevents an insertion into the bracket (2) in incorrect position.

4. Arrangement according to one of the preceding claims, characterized in that, at the rear of the bracket (2), a cavity (11) for signal and power supply connectors (25, 26, 28) is provided towards the outside, the terminals of which connectors terminate at the floor of the bracket in corresponding connectors (6, 7) for automatically making plug-in contacts.

5. Arrangement according to Claim 4, characterized in that the cavity (11) is closed off and shielded on the floor-side by a metallized floor trough (27) which can be snapped in.

6. Arrangement according to one of the preceding claims, characterized in that, as well as the locking hooks (12) lying above, the lateral levers (3) have, in the floor of the bracket in addition to resilient catches (13) lugs (14) which, on the splaying apart of the levers by means of their handles (15), press in the unlocked state, from below onto the casing (1) and simultaneously, in order to unlock the locking hooks (12), release the engagement of the catches (13) on the floor-side.

7. Arrangement according to one of the preceding claims, characterized in that the cylinder (16) of the lock (4) is arranged in a cast-on piece (18) of the shaft (20) of the locking device on the top and engages by means of a spigot (17) in a locking slide (19) which engages in a lateral recess (21) in the lever (3) and has below an annular groove (22) in which a spring claw (23) engages which can be snapped in from behind.

# FIG 1

FIG 2

FIG 3